# EUROPEAN PATENT SPECIFICATION

(11) **EP 2 657 945 B1**
(45) Date of publication and mention of the grant of the patent: **06.04.2016**
(21) Application number: 11850913.2
(22) Date of filing: 21.12.2011
(51) Int. Cl.: B60R 16/02, H01B 7/17, H01B 7/08, H01B 7/20, H01B 7/22, H05K 9/00, H02G 3/04

(54) **SHIELD CONDUCTOR**
ABGESCHIRMTER LEITER
CONDUCTEUR BLINDÉ

(30) Priority: 24.12.2010 JP 2010288004
(43) Date of publication of application: 30.10.2013
(73) Proprietor: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: AOYAMA, Naoki, Yokkaichi-shi Mie 510-8503 (JP); KUWAHARA, Masanori, Yokkaichi-shi Mie 510-8503 (JP); SONODA, Fujio, Yokkaichi-shi Mie 510-8503 (JP); ITANI, Yasushi, Yokkaichi-shi Mie 510-8503 (JP); SUGIMOTO, Yoshinori, Yokkaichi-shi Mie 510-8503 (JP); IZAWA, Katsutoshi, Yokkaichi-shi Mie 510-8503 (JP)
(74) Representative: Winter, Brandl, Fürniss, Hübner, Röss, Kaiser, Polte - Partnerschaft mbB
(86) International application number: PCT/JP2011/079641
(87) International publication number: WO 2012/086687

(56) References cited:
- EP-A2- 1 701 362
- DE-A1- 10 109 666
- DE-A1-102006 049 604
- DE-A1-102008 003 332
- JP-A- 2002 005 749
- JP-A- 2004 171 952
- JP-A- 2005 197 130
- JP-A- 2007 066 825
- JP-A- 2009 129 780
- US-A- 1 813 039

## Description

### TECHNICAL FIELD

The present invention relates to a shield conductor.

### BACKGROUND ART

A shield conductor having a shielding function is used to interconnect devices such as an inverter, a motor, and a battery in a vehicle, for example, a hybrid car and an electric car.

Such a shield conductor may include a plurality of electric wires and a metal pipe that is bent along a wiring route as described in JP 2004-171952 A1. The electric wires are housed in the pipe that has a circular outer circumference. A similar construction is disclosed in DE 101 09 666A1. Document DE 10 2008 003 332 A1, which is considered to be the closest prior art, shows a form-stable wiring for routing in a motor compartment of a vehicle. The wiring consists of a solid conductor with a rectangular cross section, which can be bent, curved or twisted to arrive at a desired shape which conforms to the subsequent routing of the wiring. Due to the stiffness of the conductor the wiring remains in its shape and routing place without the need of lots of fastening members. Due to the rectangular cross section of the conductor, however, bending of the conductor around an axis conforming with the short dimension of the rectangular cross section at least poses severe problems because of the increased stiffness of the conductor in this bending direction. It thus might become necessary to twist the conductor about 90° along its extension direction to have the short dimension axis also shifted by 90° in order to facilitate a subsequent bending. This is troublesome and expensive because of dedicated equipment therefore.

### DISCLOSURE OF THE PRESENT INVENTION

There is a demand for arranging the shield conductor effectively using space for installation of a shield conductor in a vehicle. More specifically, when a metal pipe having a circular outer circumference is arranged under a floor of a vehicle, the space under the floor requires at least the same height as the outer diameter of the metal pipe. The space under the floor has a limitation in height and thus a significant level of layout design is required for the metal pipe. On the other hand, the space that expands lateral to the metal pipe may be larger than a size required for housing the metal pipe. Therefore the conventional technology has a problem in arrangement of the shield conductor not effectively using the space.

This invention was accomplished in view of the foregoing circumstances. An object of this invention is to provide a shield conductor that enables a space-effective arrangement. Solution of this object is achieved by what is claimed in claim1.

A shield conductor according to this invention thus comprises: a cylindrical or tubular pipe made of metal; and an electric wire passed through the pipe, wherein the cross section of the cylindrical pipe is deformed along an extension direction in which the pipe extends such that it includes: a first deformed portion having a first short diameter portion and a first long diameter portion having different outer diameters in a peripheral direction of the pipe; and a second deformed portion being in a different position from the first deformed portion in said extension direction in which the pipe extends and having a second short diameter portion and a second long diameter portion having different outer diameters in the peripheral direction of the pipe; wherein the first and the second short diameter portions are provided in different positions in the peripheral direction, the first and the second long diameter portions are provided in different positions in the peripheral direction; and at least one of the first and the second deformed portions curves in a direction in which the short diameter of the respective short diameter portion measures.

According to the above configuration, the shield conductor is arranged such that a direction of the short diameter portion (a thickness direction) of each deformed portion corresponds to each narrower direction of an installation space and arranged such that a direction of the long diameter portion (a thickness direction) of each deformed portion corresponds to each wider direction of the installation space. Thus, the shield conductor can be housed in the space using narrower spaces in the direction of the short diameter portions (the thickness direction) and using wider spaces in the direction of the long diameter portions (the thickness direction). With this configuration, the shield conductor can be arranged using the space effectively.

The above shield conductor that enables the space-effective arrangement is bent relatively easier in the short diameter direction in each of the deformed portions. However, the deformed portion is not easily bent in each long diameter direction. This may reduce flexibility in routing of the shield conductor compared with the shield conductor having a round outer circumference. With the present configuration, the first short diameter portion is provided at the different position from the second short diameter portion in the peripheral direction of the pipe. Further, the first long diameter portion is provided at the different position from the second long diameter portion in the peripheral direction of the pipe. Thus, the pipe is easily bent in a direction in which the first deformed portion is not easily bent by bending at the second deformed portion. This enhances routing flexibility of the shield conductor. As a result, the shield conductor can be space-effectively arranged without losing the routing freedom.

According to the present invention, the shield conductor can be arranged using a space effectively.

### BRIEF DESCRIPTION OF THE DRAWINGS

Fig. 1 is a plan view of a shield conductor according to a first embodiment.
Fig. 2 is a side view of the shield conductor.
Fig. 3 is a cross-sectional view taken along line D-D and line F-F in FIG. 1.
FIG. 4 is a cross-sectional view taken along line E-E in FIG. 1.
FIG. 5 is a plan view of a forming machine.
FIG. 6 is a side-sectional view of the forming machine.
FIG. 7 is a front view of the forming machine.
FIG. 8 is a plan view of a shield conductor according to a second embodiment.
FIG. 9 is a view illustrating the shield conductor passed through a heat shrinkable tube.
FIG. 10 is a view illustrating a shield conductor connected to a braided wire according to the third embodiment.
FIG. 11 is a cross-sectional view illustrating a flat electric wire used for a shield conductor according to a fourth embodiment.

### EXPLANATION OF SYMBOLS

10: shield conductor, 11: electric wire, 20, 50: pipe, 21: first deformed portion, 21A: first short diameter portion, 21B: first long diameter portion, 23: transitional portion, 24: second deformed portion, 24A: second short diameter portion, 24B: second long diameter portion, 30: forming machine, 31, 32: roller, 31A, 32A: concave surface, 33, 34: supporting member, 35: regulating mechanism, 36: fixed portion, 37: movable portion, 38: roller adjustment portion, 39: base portion, 40: heat shrinkable tube, 51: first member, 52: second member, 53: braided wire, 60: flat electric wire, W: vehicle.

### BEST MODE FOR CARRYING OUT THE INVENTION

### <First embodiment>

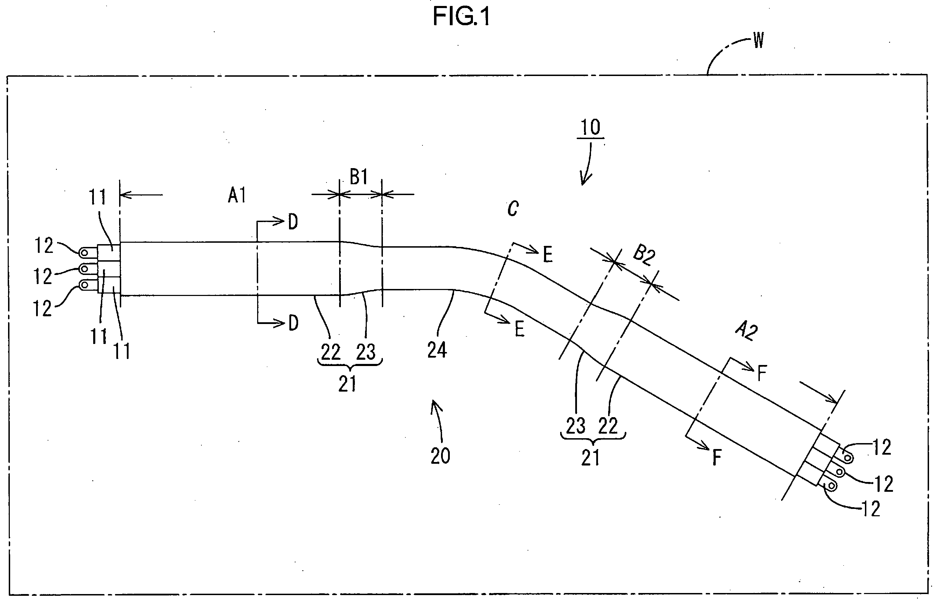

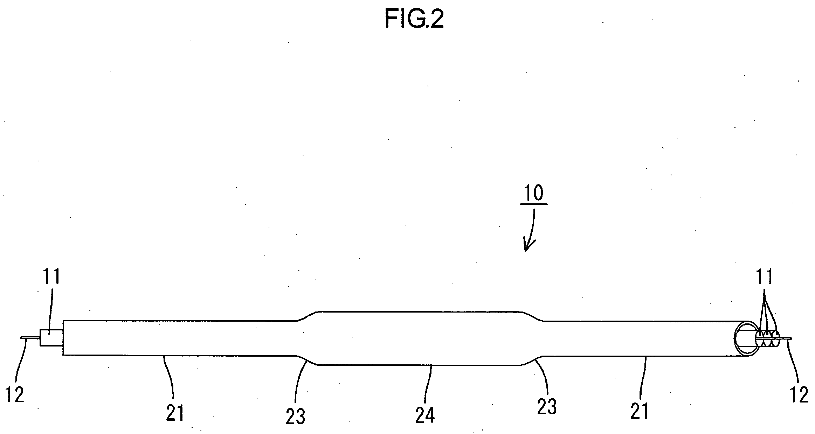

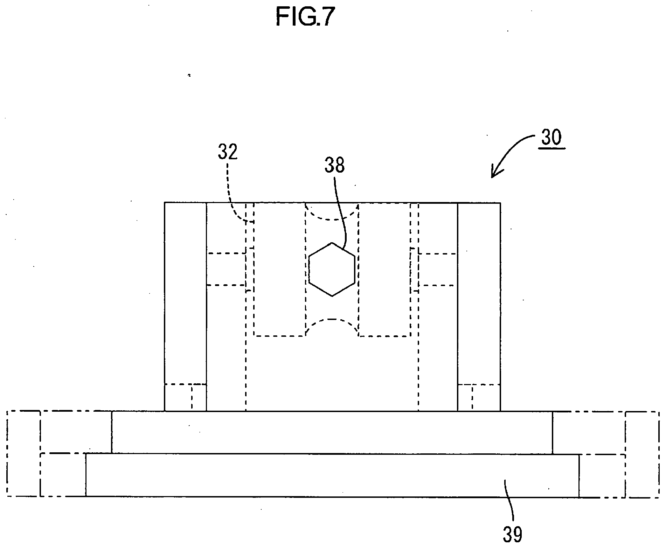

A first embodiment of the present invention will be described with reference to FIG. 1 to FIG. 7. Shield conductors 10 of this embodiment are routed among devices in a power source including a battery, an inverter, and a motor (not illustrated) for driving an electric car. The shield conductor 10 arranged between the battery and the inverter includes two electric wires 11. The shield conductor 10 arranged between the inverter and the motor includes three electric wires 11. In the following description, the shield conductor 10 including three electric wires 11 and arranged (or routed) between the inverter and the motor under a floor of vehicle W will be described. In the description, the left side and the lower right side in FIG. 1 are defined as a front side and a rear side, respectively. The top-bottom direction is defined with reference to FIG. 2.

As illustrated in FIG. 1, the shield conductor 10 includes three electric wires 11 and a pipe 20. The electric wires 11 are passed through the pipe 20. The pipe 20 has a shielding function. Each of the electric wires 11 is a coated electric wire having a round shape (a circular cross section). The electric wire 11 includes a core wire 11A and an insulation coating 11B that covers the core wire 11A. The electric wire 11 does not include a shielding layer. The core wire 11A is made of copper or copper alloy. The core wire 11A is a twisted wire made of a plurality of metal wires that are twisted one another.

The three electric wires 11 have ends with which metal terminals 12 are connected, respectively, and extended outside the pipe 20. Each metal terminal 12 includes a terminal connecting portion and an electric wire connecting portion. The terminal connecting portion is connected to a terminal of a destination device. The terminal connecting portion includes a through hole through which a shaft of a bolt can be passed. The electric wire connecting portion continues from the terminal connecting portion so as to be integral therewith, and is connected with the electric wire 11. The electric wire connecting portion includes a wire barrel and an insulation barrel. The wire barrel is crimped onto an end of the core wire 11A of the electric wire 11 by bending. The end of the core wire 11A is exposed by stripping off the end of insulation coating 11B of the electric wire 11. The insulation barrel holds the electric wire 11 over the insulation coating 11B.

The pipe 20 is made of metal (e.g. aluminum, aluminum alloy, copper, and copper alloy). The pipe 20 includes first deformed portions 21 (areas A1 and A2 in FIG. 1), a second deformed portion 24 (area C in FIG. 1), and transitional portions 23 (areas B1 and B2 in FIG. 1). The first deformed portions 21 are located at a front end and a rear end of the pipe 20. Each first deformed portion 21 extends linearly and has irregular outer diameters in the peripheral direction. The second deformed portion 24 is located at a middle area of the pipe 20. The second deformed portion 24 extends in a curved (bent) direction and has irregular outer diameters in the peripheral direction. Each transitional portion 23 is provided between the first deformed portion 21 and the second deformed portion 24. The transitional portion 23 has a shape, cross sections of which at different positions gradually change.

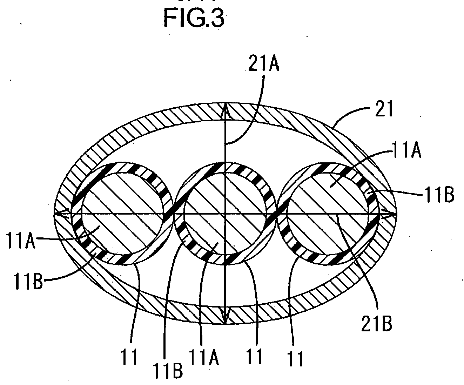

The first deformed portion 21 has a flat shape (an ellipse shape). More specifically, the first deformed portion 21 has a substantially flat shape (ellipse shape) as illustrated in FIG. 3. The first deformed portion 21 has a first short diameter portion 21A and a first long diameter portion 21B. The first short diameter portion 21A has the shortest outer diameter in the cross section of the pipe 20. The first long diameter portion 21B is formed in the position perpendicular to the first short diameter portion 21A in the periphery direction of the pipe 20. The first long diameter portion 21B has the longest outer diameter in the cross section of the pipe 20 (a position having a different outer diameter from that of the first short diameter portion 21A).

In this embodiment, the outer diameter of the first short diameter portion 21A is larger than a sum of a diameter of the electric wire 11 and a thickness of the first short diameter portion 21A (thicknesses of top and bottom parts of the first short diameter portion 21A). The outer diameter of the first long diameter portion 21B is slightly larger than a sum of diameters of the three electric wires 11 and a thickness of the first long diameter portion 21B (thicknesses of a right and a left parts of the first long diameter portion 21B). The outer diameter of the first long diameter portion 21B is of a sufficient size to pass the three electric wires 11 that are laterally aligned.

The second deformed portion 24 is located in the middle area of the pipe 20. More specifically, the second deformed portion 24 is located in a different part of the pipe 20 from the first deformed portion 21 in an extension direction (the right-and-left direction in FIG. 1) in which the pipe 20 extends. The second deformed portion 24 has a flat shape (an ellipse shape) in a cross-sectional view. In addition, the second deformed portion 24 has a flat surface (ellipse shape) that is located at a position (an angle) substantially perpendicular to a flat surface of the first deformed portion 21 in a plane perpendicular to periphery of the pipe 20.

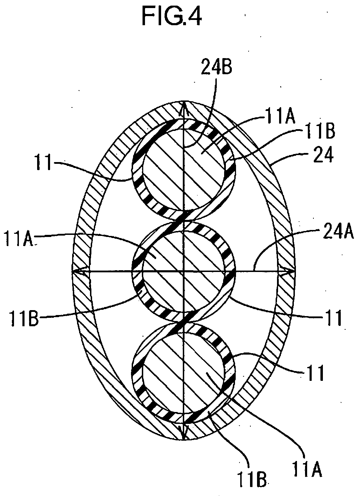

More specifically, the second deformed portion 24 has a substantially flat shape (ellipse shape) as illustrated in FIG. 4. The second deformed portion 24 includes a second short diameter portion 24A and a second long diameter portion 24B. The second short diameter portion 24A has the shortest outer diameter in the cross section of pipe 20. The second long diameter portion 24B has of the longest outer diameter in the cross section of the pipe 20 (a position having a different outer diameter from that of the second short diameter portion 24A).

In this embodiment, an outer diameter of the second short diameter portion 24A is larger than a sum of a diameter of the electric wire 11 and thicknesses of the second short diameter portion 24A (thicknesses of a right and a left parts of the second short diameter portion 24A). An outer diameter of the second long diameter portion 24B is slightly larger than a sum of diameters of three electric wires 11 and thicknesses of the second long diameter portion 24B (thicknesses of top and bottom parts of the second long diameter portion 24B). The outer diameter of the long diameter portion 24B is of a sufficient size to pass the three electric wires 11 that are horizontally aligned. The outer diameter of the second long diameter portion 24B is from an upper end of the second long diameter portion 24B to a lower end of the second long diameter portion 24B (a middle portion in the right-and-left direction). Each end has an arc shape.

As illustrated in FIG. 1, each transitional portion 23 is a portion formed through plastic deformation of the first deformed portion 21 and the second deformed portion 24. The transitional portions 23 smoothly continue from the first deformed portion 21 to the second deformed portion 24 (area B1), and from the second deformed portion 24 to the first deformed portion 21 (area B2).

As illustrated in FIG. 3, the three electric wires 11 in the first deformed portion 21 are horizontally arranged. The arrangement of the three electric wires 11 gradually changes in the transitional portion 23. As illustrated in FIG. 4, the electric wires 11 are arranged in the second deformed portion 24 such that the electric wires 11 are stacked up and down.

The pipe 20 is connected with a braided wire such that an end of the braided wire covers the end of the pipe 20. The pipe 20 and the braided wire can be connected by welding, soldering, or swaging with a swage ring, whatever is appropriate.

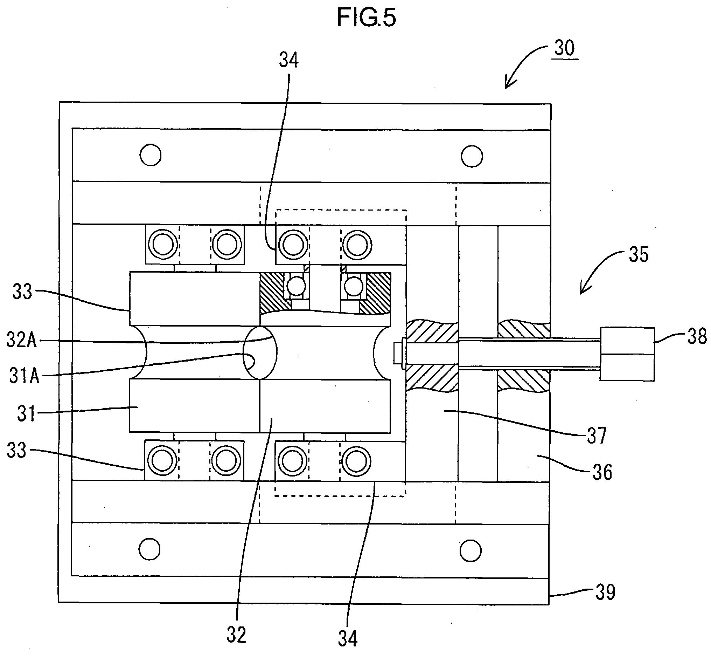

The pipe 20 is formed by a cold rolling technology using a forming machine 30. As illustrated in FIG. 5, the forming machine 30 includes a pair of rollers 31 and 32, supporting members 33 and 34, a regulating mechanism 35, a base portion 39, a drive member (not illustrated), and an input portion (not illustrated). The supporting members 33 and 34 support rollers 31 and 32 with shafts of the rollers 31 and 32, respectively. The regulating mechanism 35 moves the roller 32 so as to regulate a distance between the rollers 31 and 32. The base portion 39 is a thick board. The base portion 39 holds the supporting members 33 and 34 and the regulating mechanism 35. The drive member rotates each of the rollers 31 and 32. The input portion commands the drive member to drive.

The rollers 31 and 32 have a cylindrical shape. Each roller 31 or 32 has a groove in the round outer periphery in the middle area thereof in the axial direction of the roller 31 or 32 for an entire circumference. The groove is formed by concaving the periphery of the roller 31 or 32 such that concave surfaces 31A and 32A are formed in the periphery. Each of the concave surfaces 31A and 32A has an appropriate curvature to form the first deformed portion 21 and the second deformed portion 24. Thus, when the rollers 31 and 32 are moved closer to each other, the concave surfaces 31A and 32A can plastically deform the outer periphery of the cylindrical pipe 20, and form the first and the second deformed portions 21 and 24.

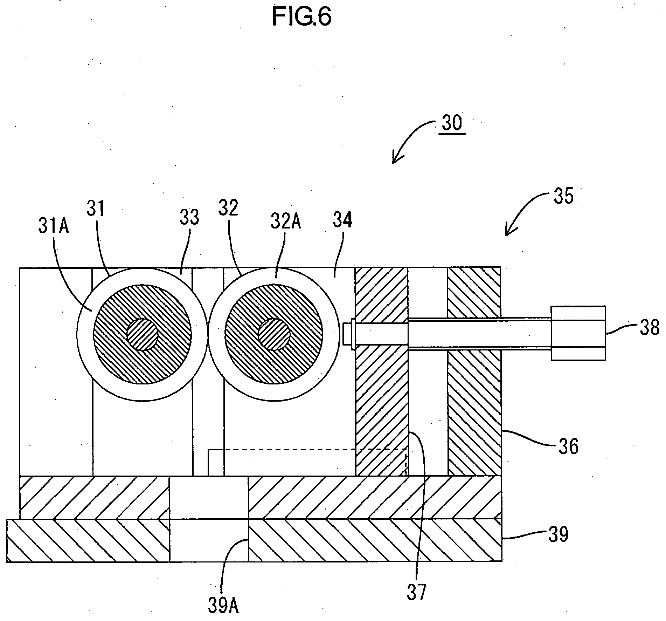

The supporting members 33 and 34 are provided for the rollers 31 and 32, respectively. The supporting members 33 and 34 hold shafts protruding from the respective rollers 31 and 32 such that the shafts are rotatable. A lower end of the supporting member 33 is fixed to the base portion 39. The supporting member 34 (located closer to the regulating mechanism 35) is fixed to the regulating mechanism 35. As illustrated in FIG. 6, the regulating mechanism 35 includes a fixed portion 36, a movable portion 37, and a roller adjustment portion 38. The fixed portion 36 is fixed to the base portion 39. The movable portion 37 moves in a direction in which the rollers 31 and 32 are arranged on the base portion 39. The roller adjustment portion 38 rotates to move the movable portion 37.

The roller adjustment portion 38 includes a shaft and a polygonal head. The shaft has a screw thread in a portion close to the head but not in an end portion close to a tip thereof. The fixed portion 36 has a screw hole. The screw thread in the shaft of the roller adjustment portion 38 fits the screw hole. The movable portion 37 has a rounded through hole having no screw thread therein. The end portion of the shaft of the roller adjustment portion 38 is inserted to the through hole of the movable portion 37. The roller adjustment portion 38 is fixed to the movable portion 37 such that the shaft is rotatable but unmovable relative to the direction in which the rollers 31 and 32 are arranged. The movable portion 37 is integrated with the supporting member 34 located closer to the movable portion 37 than the supporting member 33. Accordingly, when the roller adjustment portion 38 rotates, the movable portion 37 moves and the roller 32 moves in conjunction with the movable portion 37 in the direction in which the rollers 31 and 32 are arranged.

The base portion 39 has an insertion hole 39A in which the pipe 20 is to be inserted. The insertion hole 39A is a path for the pipe 20 that is passed through between the concave surface 31A of the roller 31 and the concave surface 32A of the roller 32.

Next, a method of forming the pipe 20 will be described. First, a metal pipe (not illustrated) that is cylindrical (a cylindrical outer periphery) with a constant outer diameter and linear for an entire length thereof is prepared. Next, the roller adjustment portion 38 of the forming machine 30 is operated to increase a distance between the rollers 31 and 32 (the distance between the concave surfaces 31A and 32A that are opposite each other). The distance between the rollers 31 and 32 is increased such that the metal pipe can pass through. Then, the metal pipe is inserted between the concave surfaces 31A and 32A until a portion of the metal pipe which is to be provided as one of the transitional portions 23 reaches the concave surfaces 31A and 32A. Then, the roller adjustment portion 38 is operated to bring the concave surfaces 31A and 32A into contact with the metal pipe 20.

The input member of the forming machine 30 sends a signal to drive the drive member. The drive member rotates the rollers 31 and 32 in directions in which the rollers 31 and 32 wind the metal pipe. When the distance between the concave surfaces 31A and 32A is gradually decreased by the rotation of the rollers 31 and 32, the metal pipe is deformed into a part of the one of the transitional portion 23. When the distance between the concave surfaces 31A and 32A is further decreased by the rotation of the rollers 31 and 32, the metal pipe is deformed into one of the first deformed portions 21.

Similarly, when the distance between the concave surfaces 31A and 32A is gradually decreased in an opposite direction from the one of the transitional portion 23 by the rotation of the rollers 31 and 32, a remaining part of one of the transitional portion 23 is formed. When the distance between the concave surfaces 31A and 32A is further decreased by the rotation of the rollers 31 and 32, the metal pipe is deformed into the second deformed portion 24.

The same processes are performed for a portion of the metal pipe which is to be provided as the other one of the transitional portions 23. Accordingly, the deformed portions 21 and 24 are formed. The deformed portions 21 and 24 may be plastically formed in a step by step together with another forming machine arranged under the forming machine 30.

Next, a bending process of the second deformed portion 24 will be described. The transitional portions 23 are held by arms (not illustrated). One of the arms moves in a direction of the second short diameter portion 24A of the second deformed portion 24 until the arm reaches a position corresponding to a curvature (an inclined angle) of the second deformed portion 24. When the second deformed portion 24 is plastically curved, the formation of the pipe 20 is complete. The bending of the second deformed portion 24 (an axial direction) is not limited to the above process. Other known processes can be used for bending the second deformed portion 24.

The three electric wires 11 are then inserted into the pipe 20 that is formed described above and the shield conductor 10 is prepared. The electric wires 11 can be inserted before and after the pipe 20 is formed. The shield conductor 10 is arranged (routed) under the floor of the vehicle W. More specifically, the shield conductor 10 is arranged on an under surface of a floor-under panel with being exposed to a lower direction (opposite a road surface) . The shield conductor 10 is arranged such that a direction of the first short diameter portion 21A of the first deformed portion 21 (a thickness direction of the first short diameter portion) corresponds to the top-bottom direction. Further, the shield conductor 10 is arranged such that a direction of the first long diameter portion 21B (a thickness direction) and a bending direction of the second deformed portion 24 correspond to the right-and-left direction (a horizontal direction). The metal terminals 12 of the electric wire 11 are connected with respective external terminals of other electric wires that are extended to an upper interior side of the vehicle W.

Next, functions and effects of the embodiment will be explained. According to this embodiment, the shield conductor 10 includes a pipe 20 made of metal and an electric wire 11. The electric wire 11 is passed through the pipe 20. The pipe 20 includes a first deformed portion 21 and a second deformed portion 24. The first deformed portion 21 has a first short diameter portion 21A and a first long diameter portion 21B having different outer diameters in a peripheral direction of the pipe 20. The second deformed portion 24 is in a different position from the first deformed portion 21 in an extension direction in which the pipe extends and includes a second short diameter portion 24A and a second long diameter portion 24B having different outer diameters in the peripheral direction of the pipe 20. The first and the second short diameter portions 21A and 24A are provided in different positions in the peripheral direction. The first and the second long diameter portions 21B and 24B are provided in different positions in the peripheral direction.

According to this embodiment, the shield conductor 10 is arranged such that the direction of the first short diameter portion 21A of the first deformed portion 21 (the thickness direction) corresponds to each narrower direction of the installation space and arranged such that the direction of the first long diameter portion 21B (the thickness direction) corresponds to each wider direction of the installation space. With this configuration, the shield conductor can be arranged using the space effectively.

The above shield conductor that can be arranged using the space effectively is easily bent in the direction of the first short diameter portion 21A at the first deformed portions 21. However, the first deformed portions are not easily bent in the direction of the first long diameter directions 21B. This may reduce flexibility in routing of the shield conductor compared with the shield conductor having a round outer circumference.

With the present configuration, the first short diameter portion 21A of the first deformed portion 21 is formed at the different position (an angle) from the second short diameter portion 24A of the second deformed portion 24 in the peripheral direction of the pipe 20. Further, the first long diameter portion 21B of the first deformed portion 21 is formed at the different position (an angle) from the second long diameter portion 24B of the second deformed portion 24 in the peripheral direction of the pipe 20. Thus, the pipe 20 is bent relatively easier in a direction in which the first deformed portion 21 is not easily bent by bending at the second deformed portion 24. This can enhance flexibility in routing. Consequently, the shield conductor 10 can be space-effectively arranged using the space effectively without losing the routing freedom.

According to above embodiment, the first deformed portion 21 has the flat shape. With this configuration, the first deformed portion 21 can easily house a plurality of electric wires 11 therein. Further, the first deformed portion 21 can be arranged in a compact space compared with the other configurations.

According to above embodiment, the first deformed portion 21 and the second deformed portion 24 are at the positions (angles) perpendicular to each other in the peripheral direction of the pipe 20. Thus, a direction in which the long diameter of the first long diameter portion 21B measures corresponds to a direction in which the second short diameter in which the short diameter portion 24A measures.

As mentioned above, the direction in which the long diameter of the first long diameter portion 21B corresponds to the direction in which the short diameter of the second short diameter portion 24A. Thus, the shield conductor 10 can be easily bent in the direction of the first long diameter portion 21B by bending at the second short diameter portion 24A. This enables the shield conductor 10 to enhance the routing freedom as well as using the space more effectively.

According to the above embodiment, the second deformed portion 24 curves in the direction in which the short diameter of the second short diameter portion 24A with respect to the extension direction of the pipe 20. In other words, the second deformed portion 24 curves in the direction in which the short diameter of the short diameter portion 24A with respect to a central axis of the pipe 20. The pipe 20 can be easily bent in the directions of the short diameter portions 21A and 24A compared with the direction of the long diameter portions 21B and 24B. Thus, the pipe 20 can be easily formed.

According to the above embodiment, the deformed portions 21 and 24 are formed by deforming the cylindrical metal pipe. Thus, the deformed portions 21 and 24 can be easily formed compared with a case in which the deformed portions 21 and 24 are formed using dies corresponding to the shapes of the deformed portions 21 and 24.

### <Second embodiment>

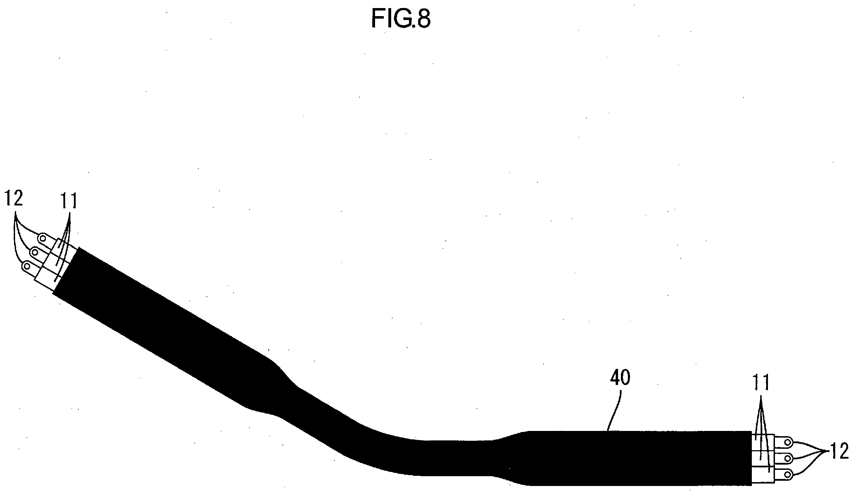

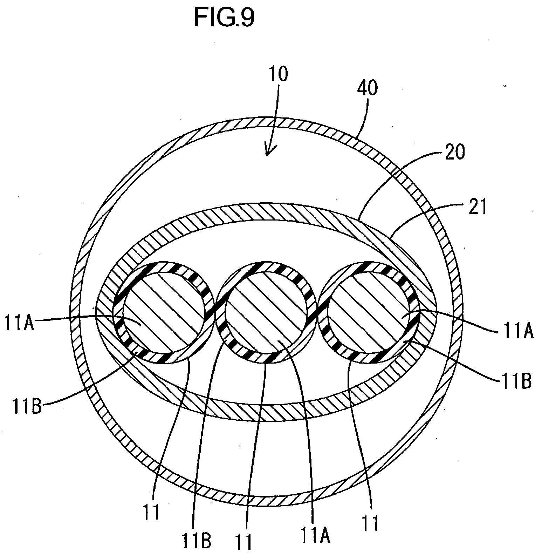

A second embodiment of this invention will be described with reference to FIG. 8 and FIG. 9. The same parts as those in the above embodiment will be indicated by the same symbols and will not be explained.

In the second embodiment, the outer periphery of the shield conductor 10 is covered with a heat shrinkable tube 40 as illustrated in FIG. 8. As illustrated in FIG. 9, the shield conductor 10 is inserted to the heat shrinkable tube 40, and then the heat shrinkable tube 40 is heated to shrink. As a result, the heat shrinkable tube 40 adheres tightly to an outer peripheral surface of the pipe 20.

Because the heat shrinkable tube 40 adheres tightly to the outer periphery of the pipe 20, the outer periphery of the pipe 20 is protected by the heat shrinkable tube 40.

### <Third embodiment>

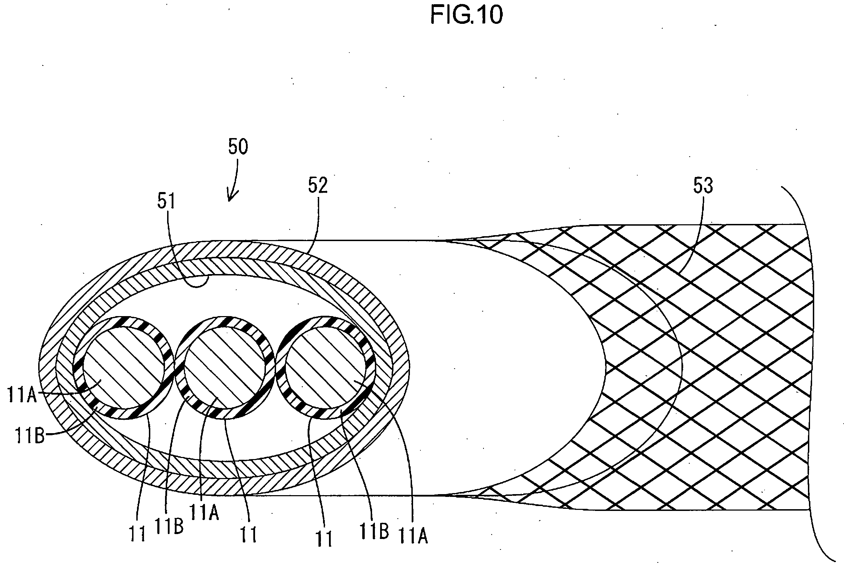

A third embodiment of this invention will be described with reference to FIG. 10. The same parts as those in the above embodiments will be indicated by the same symbols and will not be explained. The pipe 20 according to the above embodiments is made of a material such as aluminum alloy. In the third embodiment, a pipe 50 is made of a cladding material including a first member 51 on an inner side and a second member 52 on an outer side that are layered as illustrated in FIG. 10.

The first member 51 is made of aluminum or aluminum alloy. The second member 52 is made of iron or iron alloy.

A braided wire 53 includes tinned copper alloy wires. The braided wire 53 covers an outer periphery of the second member 52 at an end of the pipe 50. The pipe 50 and the braided wire 53 are connected at the end of the pipe 50 (at the end of the second member 52 of the pipe 50) by a connecting means such as welding, soldering, and swaging with a swage ring.

If different kinds of metals are in contact with each other, electrical corrosion occurs in general. Because the tinned copper alloy wires are used for the braided wire 53, electrical corrosion is more likely to occur if the end part of the pipe 50 made of aluminum or aluminum alloy is connected to the braided wire 53.

According to the above embodiment, the braided wire 53 is connected to the second member 52 of the pipe 50. The second member 52 is made of iron or iron alloy, which is less likely to cause electrical corrosion against the tinned material compared with aluminum or aluminum alloy. Thus, electrical corrosion is less likely to occur in the braided wire 53 that is connected to the second member 52 compared with a case in which the braided wire 53 is connected to the first member 51 (aluminum or aluminum alloy).

### <Fourth embodiment>

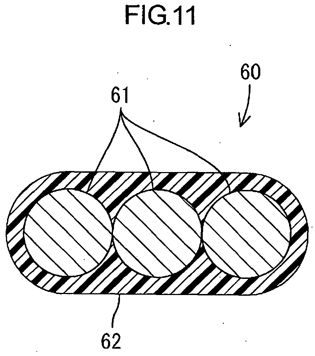

A fourth embodiment of this invention will be described with reference to FIG. 11. The same parts as those in the above embodiments will be indicated by the same symbols and will not be explained. The above embodiments include the round electric wires that are inserted to the pipes 20 and 50, respectively. The fourth embodiment includes a flat electric wire 60 that is inserted to a pipe.

As illustrated in FIG. 11, the flat electric wire 60 includes a flat conductor and an insulation coating 62. The flat conductor has a substantially flat shape. The flat conductor includes a plurality of core wires 61 that are arranged parallel to and in contact with one another. The insulation coating 62 is made of resin, and covers a periphery of the flat conductor. The flat electric wire 60 does not include a shielding layer. Each of the core wires 61 is made from a plurality of metal wires made of copper or copper alloy. The metal wires are twisted together into a helical shape.

The above mentioned flat electric wire 60 has a substantially rectangular cross section, that is, has less dead space. In addition, the flat electric wire 60 has a large surface area, which provides high heat release capability. Thus, the current carrying capacity of the flat electric wire 60 can be increased.

The flat electric wire 60 has short diameter sides and long diameter sides. The flat electric wire 60 is arranged inside a non-illustrated pipe such that the short diameter sides of the flat electric wire 60 correspond to the first short diameter portion of the first deformed portion, and the long diameter sides of the flat electric wire 60 correspond to the first long diameter portion of the first deformed portion. Accordingly, the pipe (not illustrated) has the first long diameter portion of which a diameter corresponds to the number and the shape of the flat electric wires 60 in the cross-sectional view. Consequently, the pipe can have a flatter shape.

With this configuration, the shield conductor can be provided with the flat electric wire 60 having the large surface area and high heat release capability can be arranged in space that is effectively used while still can be arranged effectively using space.

### <Other embodiment>

This invention is not limited to the embodiments described in the above description and explained with reference to the drawings. The following embodiments may be included in the technical scope of this invention.
(1) The above embodiments include three of the electric wires 11 that are inserted to the pipe 20. However, the technical scope is not limited to the three electric wires 11. The number of the electric wires 11 may be two, or equal to or more than four.
(2) The shield conductors 10 are arranged in underfloor space of the vehicle W. However, the shield conductor 10 may be arranged at different locations from the underfloor space of the vehicle W. Further, the technical scope is not limited to the vehicle W and may to anything that requires the shield conductor other than the vehicle W.
(3) According to the above embodiment, the number of the first and the second deformed portions 21 and 24, the length thereof in the axial direction (extension direction), and the position thereof in the entire length of the pipe are determined based on to the wiring route for the electric wires 11 under the floor of the vehicle W. If the shield conductor 10 is arranged in a different place, the number of the first and the second deformed portions 21 and 24, the length thereof in the axial direction (extension direction), and the position thereof in the entire length of the pipe can be determined based on to the wiring route.
(4) The pipe 20 is formed by deforming the cylindrical metal pipe using the forming machine 30. However, this technical scope is not limited thereto. The pipe 20 may be formed using the following processes: forming a board having a deformed portion using a die; curving the board to a circular shape; and connecting edges of the board each other by welding. In addition, the above embodiments include transitional portions 23. However, the transitional portion 23 may not be included.
(5) Each of the above embodiments includes the first and the second deformed portions 21 and 24 that have the flat shapes. However, this technical scope is not limited to the flat shape. A non-flat oval shape and a shape having a recess in a part may be used if the shape includes at least a short diameter portion and a long diameter portion. Moreover, the shapes of the first and the second deformed portions 21 and 24 only differ in the positions (angles) in the axial direction in the above embodiments. However, the first and the second deformed portions 21 and 24 may have different shapes.
(6) The above embodiments includes the second deformed portion 24 (the axis of the second deformed portion 24) that is curved in the direction of the second short diameter portion 24A, but technical scope is not limited thereto. The second deformed 24(the axis of the second deformed portion 24) may be sharply bent in the direction of the second short diameter portion 24A.
(7) According to the above embodiments, the second deformed portion 24 is bent in the direction of the second short diameter portion 24A. However, the first deformed portion 21 may be bent in the direction of the first short diameter portion 21A. Further, the first and the second deformed portions 21 and 24 may be bent in directions of the first and the second short diameter portions 21A and 24A, respectively, according to the arrangement space of the shield conductor.

There is a demand for arranging the shield conductor effectively using space for installation of a shield conductor in a vehicle. More specifically, when a metal pipe having a circular outer periphery is arranged under a floor of a vehicle, the space under the floor requires at least the same height as the outer diameter of the metal pipe. The space under the floor has a limitation in height and thus a significant level of layout design is required for the metal pipe. On the other hand, the space that expands lateral to the metal pipe may be larger than a size required for housing the metal pipe. Therefore, the conventional technology has a problem in arrangement of the shield conductor not effectively using the space.

This invention was accomplished in view of the foregoing circumstances. An object of this invention is to provide a shield conductor that can be arranged using a space effectively.

The technology disclosed in this description includes a shield conductor including a pipe made of metal and an electric wire. The electric wire is passed through the pipe. The pipe includes a first deformed portion and a second deformed portion. The first deformed portion has a first short diameter portion and a first long diameter portion having different outer diameters in the peripheral direction of the pipe. The second deformed portion is in a different position from the first deformed portion in an extension direction in which the pipe extends and includes a second short diameter portion and a second long diameter portion having different outer diameters in the peripheral direction of the pipe. The first and the second short diameter portions are provided in different positions in the peripheral direction. The first and the second long diameter portions are provided in different positions in the peripheral direction.

According to the above configuration, the shield conductor is arranged such that a direction of the short diameter portion (a thickness direction) of each deformed portion corresponds to each narrower direction of an installation space and arranged such that a direction of the long diameter portion (a thickness direction) of each deformed portion corresponds to each wider direction of the installation space. Thus, the shield conductor can be housed in the space using narrower spaces in the direction of the short diameter portions (the thickness direction) and using wider spaces in the direction of the long diameter portions (the thickness direction). With this configuration, the shield conductor can be arranged using the space effectively.

The above shield conductor that enables the space-effective arrangement is bent relatively easier in the short diameter direction in each of the deformed portions. However, the deformed portion is not easily bent in each long diameter direction. This may reduce flexibility in routing of the shield conductor compared with the shield conductor having a round outer circumference. With the present configuration, the first short diameter portion is provided at the different position from the second short diameter portion in the peripheral direction of the pipe. Further, the first long diameter portion is provided at the different position from the second long diameter portion in the peripheral direction of the pipe. Thus, the pipe is easily bent in a direction in which the first deformed portion is not easily bent at the second deformed portion. Namely, the shield conductor can enhance flexibility in routing. As a result, the shield conductor can be space-effectively arranged without losing the routing freedom.

The following configurations are further preferable. Each deformed portion has the flat shape. With this configuration, the deformed portion can easily house a plurality of electric wires therein. Further, the deformed portion can be arranged in a compact space compared with the other configurations.

The first long diameter portion has the direction in which the long diameter of the first long diameter portion that is parallel to the direction in which the short diameter of the second short diameter portion. With this configuration, the direction of the first long diameter portion corresponds to the direction of the second short diameter portion. Thus, the shield conductor can be easily bent in the direction of the first long diameter portion of the first deformed portion at the second short diameter portion of the second deformed portion. As a result, the shield conductor can enhance the routing freedom as well as using the space more effectively.

At least one of the first short diameter portion and the second short diameter portion is bent in the direction of the short diameter portion. The pipe can be easily bent in the directions in which the short diameters of the short diameter portions compared with the direction in which the long diameters of the long diameter portions. Thus, the pipe can be easily formed.

Each deformed portion is formed by deforming the cylindrical pipe. Thus, the deformed portion can be easily formed compared with a case in which the deformed portion is formed using different dies for different shapes.

The heat shrinkable tube adheres tightly to the outer periphery of the pipe 20. Therefore, the outer periphery of the pipe is protected by the heat shrinkable tube.

The pipe is made of a cladding material including the first member on the inner side and the second member on the outer side thereof that are layered with each other. The second member is made of the material that is less likely to cause electrical corrosion against the shield member compared with the material of the first member. The shield member is connected to an end part of the pipe and covers the end part of the outer periphery of the second member.

It is known that different metals cause electrical corrosion when the metals are connected to each other. However, the shield member according to this configuration is connected to the second member that is less likely to cause electrical corrosion against the shield member than the first member. Thus, electrical corrosion is less likely to cause compared with a case in which the shield member is connected to the first member.

The shield member is the braided member. The first member is made of aluminum or aluminum alloy. The second member is made of iron or iron alloy.

The braided wire is generally made of the tinned copper alloy wire. If the end part of the pipe made of aluminum or aluminum alloy is connected to the braided wire, electrical corrosion is more likely to occur. However, the braided wire is connected to the outer surface of the pipe made of iron or iron alloy according to this configuration. Therefore, electrical corrosion is less likely to occur compared with a case in which the braided wire is connected to aluminum or aluminum alloy.

The electric wire is the flat electric wire including the flat conductor and the insulation coating. The flat conductor has the flat shape. The insulation coating coats the flat conductor. The flat electric wire is arranged such that the short diameter sides of the flat electric wire correspond to the short diameter portions of the deformed portion and the long diameter sides of the flat electric wire correspond to the long diameter portions of the deformed portion. With this configuration, the short diameter sides of the flat electric wire is arranged corresponding to the short diameter portion of the deformed portion and the long diameter sides of the flat electric wire is arranged corresponding to the long diameter portion of the deformed portion. As a result, the shield conductor can be provided with the flat electric wire 60 having the large surface area and high heat release capability can be arranged in space that is effectively used while still can be arranged effectively using space.

The shield conductor is arranged under the floor of the vehicle.

According to the technology disclosed in this description, the shield conductor can be arranged using the space effectively.

## Claims

1. A shield conductor (10) comprising:
a cylindrical or tubular pipe (20) made of metal; and
an electric wire (11) passed through the pipe (20),
wherein the cross section of the cylindrical pipe (20) is deformed along an extension direction in which the pipe (20) extends such that it includes:
a first deformed portion (21) having a first short diameter portion (21A) and a first long diameter portion (21 B) having different outer diameters in a peripheral direction of the pipe (20); and
a second deformed portion (24) being in a different position from the first deformed portion (21) in said extension direction in which the pipe (20) extends and having a second short diameter portion (24A) and a second long diameter portion (24B) having different outer diameters in the peripheral direction of the pipe (20);
wherein the first and the second short diameter portions (21A, 24A) are provided in different positions in the peripheral direction,
the first and the second long diameter portions (21 B, 24B) are provided in different positions in the peripheral direction; and
at least one of the first and the second deformed portions (21, 24) curves in a direction in which the short diameter of the respective short diameter portion (21A, 24A) measures.

2. The shield conductor (10) according to claim 1, wherein the first and the second deformed portions (21, 24) have flat shapes.

3. The shield conductor (10) according to one of claims 1 and 2, wherein the first long diameter portion (21 B) is parallel to the second short diameter portion (24A).

4. The shield conductor (10) according to any one of claims 1 to 3, wherein the pipe (20) is provided with a heat shrinkable tube (40) that adheres to an outer surface of the pipe (20).

5. The shield conductor (10) according to any one of claims 1 to 4, wherein the pipe (50) is made of a cladding material including a first member (51) on an inner side thereof and a second member (52) on an outer side thereof that are layered,
the second member (52) is made of a material such that electrical corrosion is less likely to occur against a shield member (53) compared with a material of the first member (51),
the_shield member (53) is connected to an end of the pipe (50), and
the shield member (53) covers an outer periphery of the second member (52) at the end of the pipe (50).

6. The shield conductor (10) according to claim 5, wherein
the shield member (53) is a braided wire,
the material of the first member (51) is aluminum or aluminum alloy, and
the material of the second member (52) is iron or iron alloy.

7. The shield conductor (10) according to any one of claims 1 to 6, wherein the electric wire is a flat electric wire (60) including a flat conductor and an insulation coating, the flat conductor having a flat shape and being covered with the insulation coating, and
the flat electric wire (60) includes a short diameter side and a long diameter side, the flat electric wire being arranged such that the short diameter side of the flat electric wire corresponds to both or one of the first short diameter portion (21A) and the second short diameter portion (24A) and the long diameter side of the flat electric wire corresponds to both or one of the first the long diameter portion and the second long diameter portion (24B).

8. Vehicle including the shield conductor (10) according to any one of claims 1 to 7, wherein the shield conductor (10) is arranged under the floor of the vehicle.

## Patentansprüche

1. Abgeschirmter Leiter (10), aufweisend:
eine zylindrische oder rohrförmige Leitung (20) aus Metall;
einen elektrischen Draht (11), der durch die Leitung (20) verläuft,
wobei der Querschnitt der zylindrischen Leitung (20) entlang einer Erstreckungsrichtung, in welcher die Leitung (20) verläuft, so verformt ist, dass er enthält:
einen ersten verformten Abschnitt (21), der einen ersten Abschnitt (21 a) kurzen Durchmessers und einen ersten Abschnitt (21 b) langen Durchmessers aufweist, welche in einer Umfangsrichtung der Leitung (20) unterschiedliche Außendurchmesser haben; und
einen zweiten verformten Abschnitt (24), der an einer unterschiedlichen Position zum ersten verformten Abschnitt (21) in besagter Erstreckungsrichtung ist, in welcher die Leitung (20) verläuft und der einen zweiten Abschnitt (24A) kurzen Durchmessers und einen zweiten Abschnitt (24B) langen Durchmessers hat, welche in Umfangsrichtung der Leitung (20) unterschiedliche Außendurchmesser haben;
wobei die ersten und zweiten Abschnitte (21A, 24A) kurzen Durchmessers in Umfangsrichtung an unterschiedlichen Positionen angeordnet sind,
die ersten und zweiten Abschnitte (21 B, 24B) langen Durchmessers in Umfangsrichtung an unterschiedlichen Positionen angeordnet sind; und
wenigstens einer der ersten und zweiten verformten Abschnitte (21 oder 24) sich in einer Richtung krümmt, in welcher der kurze Durchmesser des entsprechenden Abschnitts (21A, 24A) kurzen Durchmessers verläuft.

2. Abgeschirmter Leiter (10) nach Anspruch 1, wobei die ersten und zweiten verformten Abschnitte (21, 24) flache Formgebung haben.

3. Abgeschirmter Leiter (10) nach Anspruch 1 oder 2, wobei der erste Abschnitt (21 B) langen Durchmessers parallel zum zweiten Abschnitt (24A) kurzen Durchmessers ist.

4. Abgeschirmter Leiter (10) nach einem der Ansprüche 1 bis 3, wobei die Leitung (20) mit einem Wärmeschrumpfschlauch (40) versehen ist, der an einer Außenfläche der Leitung (20) haftet.

5. Abgeschirmter Leiter (10) nach einem der Ansprüche 1 bis 4, wobei die Leitung (50) aus einem Überzugsmaterial ist, mit einem ersten Bauteil (51) an einer Innenseite hiervon und einem zweiten Bauteil (52) an einer Außenseite hiervon, welche übereinander liegen,
wobei das zweite Bauteil (52) aus einem Material derart ist, dass elektrische Korrosion gegenüber einem Abschirmteil (53im Vergleich zu einem Material des ersten Bauteils (51)) weniger wahrscheinlich auftritt,
das Abschirmteil (53) mit einem Ende der Leitung (50) verbunden ist, und
das Abschirmteil (53) einen Außenumfang des zweiten Bauteils (52) am Ende der Leitung (50) bedeckt.

6. Abgeschirmter Leiter (10) nach Anspruch 5, wobei
das Abschirmteil (53) ein Drahtgewebe ist,
das Material des ersten Bauteils (51) Aluminium oder eine Aluminiumlegierung ist, und
das Material des zweiten Bauteils (52) Eisen oder eine Eisenlegierung ist.

7. Abgeschirmter Leiter (10) nach einem der Ansprüche 1 bis 6, wobei
der elektrische Draht ein elektrischer Flachdraht (60) mit einem Flachleiter und einer isolierenden Beschichtung ist, wobei der Flachleiter eine flache Form hat und von der isolierenden Beschichtung bedeckt ist, und
der elektrische Flachdraht (60) eine Seite kurzen Durchmessers und eine Seite langen Durchmessers enthält, wobei der elektrische Flachdraht so angeordnet ist, dass die Seite kurzen Durchmessers des elektrischen Flachdrahts beiden oder einem von erstem Abschnitt (21A) kurzen Durchmessers und zweitem Abschnitt (24A) kurzen Durchmessers entspricht und die Seite langen Durchmessers des elektrischen Flachdrahts beiden oder einem von erstem Abschnitt langen Durchmessers und zweitem Abschnitt (24B) langen Durchmessers entspricht.

8. Fahrzeug mit dem abgeschirmten Leiter (10) nach einem der Ansprüche 1 bis 7, wobei der abgeschirmte Leiter (10) unter dem Boden des Fahrzeugs angeordnet ist.

## Revendications

1. Conducteur écran (10), comprenant :
un tuyau cylindrique ou tubulaire (20) fait de métal ; et
un fil électrique (11) passant à travers le tuyau (20),
dans lequel la section transversale du tuyau cylindrique (20) est déformée le long d'une direction d'extension dans laquelle le tuyau (20) s'étend de telle sorte qu'elle inclue :
une première portion déformée (21) possédant une première portion à court diamètre (21A) et une première portion à long diamètre (21B) possédant des diamètres extérieurs différents dans une direction périphérique du tuyau (20) ; et
une seconde portion déformée (24) étant dans une position différente de celle de la première portion déformée (21) dans ladite direction d'extension dans laquelle le tuyau (20) s'étend et possédant une seconde portion à court diamètre (24A) et une seconde portion à long diamètre (24B) possédant des diamètres extérieurs différents dans la direction périphérique du tuyau (20) ;
dans lequel les première et seconde portions à courts diamètres (21A, 24A) sont prévues dans des positions différentes dans la direction périphérique,
les première et seconde portions à longs diamètres (21B, 24B) sont prévues dans des positions différentes dans la direction périphérique ; et
au moins une des première et seconde portions déformées (21, 24) est incurvée dans une direction dans laquelle le court diamètre de la portion à court diamètre respective (21A, 24A) est mesuré.

2. Conducteur écran (10) selon la revendication 1, dans lequel les première et seconde portions déformées (21, 24) présentent des formes plates.

3. Conducteur écran (10) selon l'une des revendications 1 et 2, dans lequel la première portion à long diamètre (21B) est parallèle à la seconde portion à court diamètre (24A).

4. Conducteur écran (10) selon l'une quelconque des revendications 1 à 3, dans lequel le tuyau (20) est pourvu d'un tube thermo-rétractable (40) qui adhère à une surface extérieure du tuyau (20).

5. Conducteur écran (10) selon l'une quelconque des revendications 1 à 4, dans lequel
le tuyau (50) est fait d'un matériau de gainage incluant un premier organe (51) sur un côté intérieur de celui-ci et un second organe (52) sur un côté extérieur de celui-ci qui sont stratifiés,
le second organe (52) est fait d'un matériau de telle sorte qu'une corrosion électrique soit moins vraisemblable de se produire contre un organe écran (53) par rapport à un matériau du premier organe (51),
l'organe écran (53) est raccordé à une extrémité du tuyau (50), et
l'organe écran (53) recouvre une périphérie extérieure du second organe (52) à l'extrémité du tuyau (50).

6. Conducteur écran (10) selon la revendication 5, dans lequel
l'organe écran (53) est un fil tressé,
le matériau du premier organe (51) est de l'aluminium ou un alliage d'aluminium, et
le matériau du second organe (52) est du fer ou un alliage de fer.

7. Conducteur écran (10) selon l'une quelconque des revendications 1 à 6, dans lequel le fil électrique est un fil électrique plat (60) incluant un conducteur plat et un revêtement d'isolation, le conducteur plat présentant une forme plate et étant couvert avec le revêtement d'isolation, et
le fil électrique plat (60) inclut un côté à court diamètre et un côté à long diamètre, le fil électrique plat étant agencé de telle sorte que le côté à court diamètre du fil électrique plat corresponde aux deux ou à une parmi la première portion à court diamètre (21A) et la seconde portion à court diamètre (24A) et le côté à long diamètre du fil électrique plat corresponde aux deux ou à une parmi la première portion à long diamètre et la seconde portion à long diamètre (24B).

8. Véhicule incluant le conducteur écran (10) selon l'une quelconque des revendications 1 à 7, dans lequel le conducteur écran (10) est agencé sous le plancher du véhicule.
